# EUROPÄISCHE PATENTSCHRIFT

(11) **EP 2 674 605 B1**
(45) Veröffentlichungstag und Bekanntmachung des Hinweises auf die Patenterteilung: **20.05.2015**
(21) Anmeldenummer: 13183893.0
(22) Anmeldetag: 29.09.2011
(51) Int. Cl.: F02M 35/024, B01D 46/24

(54) **Filterelement und Luftfilter**
Filter element and air filter
Élément de filtre et filtre à air

(30) Priorität: 13.10.2010 DE 102010042426
(43) Veröffentlichungstag der Anmeldung: 18.12.2013
(62) Teilanmeldung aus: 11763662.1
(73) Patentinhaber: MAHLE International GmbH, 70376 Stuttgart (DE)
(72) Erfinder: Berisha, Bashkim, 71229 Leonberg (DE); Biba, Stefan, 74354 Besigheim (DE)
(74) Vertreter: BRP Renaud & Partner mbB Rechtsanwälte Patentanwälte Steuerberater

(56) Entgegenhaltungen:
- EP-A1- 1 880 752
- EP-A2- 0 100 631
- WO-A1-2006/013326
- WO-A1-2007/009040
- DE-U1-202005 009 097
- DE-U1-202007 001 819
- GB-A- 2 025 522
- JP-A- 56 098 555
- JP-A- 2001 123 897
- JP-A- 2007 205 213
- JP-U- H04 117 169

## Beschreibung

Die vorliegende Erfindung betrifft ein Filterelement für ein Luftfilter einer Frischluftanlage einer Brennkraftmaschine, insbesondere eines Kraftfahrzeugs, mit den Merkmalen des Oberbegriffs des Anspruchs 1. Die vorliegende Erfindung betrifft außerdem ein mit einem derartigen Filterelement ausgestattetes Luftfilter.

Aus der DE 20 2005 009 097 U1 ist ein Filterelement für ein Luftfilter bekannt, das einen ringförmigen Filterkörper aus einem Filtermaterial aufweist und zwei Endscheiben besitzt, die an axialen Enden des Filterkörpers angeordnet sind. Das bekannte Filterelement ist in einem Gehäuse eines Luftfilters angeordnet, das einen tangentialen Lufteinlass im Bereich eines axialen Endes des Filterelements besitzt, sodass die Luft mit einem Drall in einen Ringraum zwischen einem Gehäusemantel und dem Filterkörper einströmen kann. Das Gehäuse weist ferner im Bereich des Lufteinlasses eine zylindrische Wandung auf, die radial zwischen dem Gehäusemantel und dem Filterkörper axial in den Ringraum hineinragt. Mit Hilfe dieser Wandung kann eine direkte Beaufschlagung des Filterkörpers mit dem durch den Lufteinlass eintretenden Luftstrom vermieden werden.

Bei Luftfiltern, die in einem Gehäuse ein Filterelement aufweisen, hat sich gezeigt, dass im Bereich des Lufteinlasses eine stärkere Schmutzbeladung des Filterelements beobachtet werden kann, was zu einer inhomogenen Beladung des Filterelements und somit zu einer Veränderung der Durchströmung des Luftfilters führt.

Die EP 0 100 631 A2 offenbart einem Luftfilter gemäß dem Merkmalen des Oberbegriffs des Anspruchs 1.

Die vorliegende Erfindung beschäftigt sich mit dem Problem, für ein Filterelement der eingangs genannten Art bzw. für ein damit ausgestattetes Luftfilter eine verbesserte Ausführungsform anzugeben, die eine Tendenz zu einer inhomogenen Schmutzbeladung des Filterelements reduziert, wobei gleichzeitig eine preiswert realisierbare Lösung angestrebt wird.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, unmittelbar am Filterelement eine Maske anzubringen, die von Luft durchströmbar ist, wobei die Maske sich nur über einen Teilbereich des Filterkörpers erstreckt. Hierzu erstreckt sich die Maske in Umfangsrichtung und axial entlang wenigstens eines Teils des Filterkörpers. Die Maske ist zwar von Luft durchströmbar, besitzt jedoch zwangsläufig einen Durchströmungswiderstand, was zur Beeinflussung der Luftströmung durch den Filterkörper genutzt werden kann. Insbesondere lässt sich die Maske am Filterelement gezielt so anbringen, dass Bereiche des Filterkörpers, die einer stärkeren Beaufschlagung durch die Luftströmung ausgesetzt sind, weitgehend durch die Maske abgeschirmt sind. Dadurch kommt es zu einem Druckausgleich und folglich zu einer Homogenisierung der Beaufschlagung des Filterkörpers durch die Luftströmung. Folglich kann die Tendenz, dass sich der Filterkörper in einem begrenzten Bereich stärker zusetzt als in den übrigen Bereichen, reduziert werden. Folglich kann auch eine Veränderung der Durchströmungsverhältnisse des Luftfilters über die Lebensdauer des Filterelements reduziert werden.

Die Maske kann direkt auf dem Filterkörper angeordnet sein und diesen berühren. Bei dieser Ausgestaltung muss die zu reinigende Luft durch die Maske hindurchströmen, um den Filterkörper in diesem Bereich zu durchströmen. Bei einem flächigen Filterkörper, wie z. B. einem Wickel, kontaktiert die Maske den Filterkörper vollflächig. Bei anderen Filterkörpern, die z. B. durch ein plissiertes Filtermedium gebildet sind, kann die Maske den Filterkörper nur in Teilbereichen, z. B. an den Faltenspitzen direkt kontaktieren. Bei anderen Ausgestaltungen kann die Maske beabstandet zu dem Filterkörper angeordnet sein, wobei zwischen dem Filterkörper und der Maske ein Spalt gebildet ist. Die zu reinigende Luft kann durch diesen Spalt hindurch strömen und den Filterkörper anströmen. Hierbei kann der Filterkörper ebenfalls durch ein beliebiges Filtermedium, welches z. B. zu einem Wickel oder einem plissierten Ringfilterelement geformt ist, gebildet sein.

Besonders vorteilhaft erstreckt sich besagte Maske axial entlang des ganzen Filterkörpers, also quasi von einer Endscheibe zur anderen. In der Umfangsrichtung erstreckt sich die Maske dann nur über einen Teil des Filterkörpers. Alternativ ist auch eine Ausführungsform vorstellbar, bei der sich die Maske in der Umfangsrichtung entlang des gesamten Filterkörpers erstreckt, also quasi ringförmig geschlossen umlaufend. In der Axialrichtung erstreckt sich die Maske dann nur über einen Teil des Filterkörpers.

Die Maske kann radial außen am Filterkörper angeordnet und an wenigstens einer Endscheibe befestigt sein. Insbesondere bei einem von außen nach innen durchströmten Filterkörper führt dies zu einem effektiven Schutz des Filterkörpers vor einer übermäßigen Beaufschlagung mit der Luftströmung von außen. Außerdem lässt sich eine derartige außen liegende Maske besonders einfach anbringen.

Alternativ ist es ebenso möglich, die Maske radial innen am Filterkörper anzuordnen und an wenigstens einer Endscheibe und/oder an einer den Filterkörper radial innen abstützenden Innenzarge des Filterelements zu befestigen. Insbesondere kann eine derartige Maske auch in die Innenzarge integriert werden, sodass die Innenzarge einen in Umfangsrichtung und ggf. in Axialrichtung variierenden Durchströmungswiderstand besitzt.

Entsprechend einer vorteilhaften Ausführungsform kann die Maske durch eine Lamellenstruktur gebildet sein, die mehrere, im Wesentlichen parallel zueinander verlaufende Lamellen aufweist, wobei die einzelnen Lamellen bevorzugt parallel zur Axialrichtung des Filterelements verlaufen.

Alternativ ist es ebenso möglich, die Maske durch eine Lochwandstruktur zu bilden. Alternativ kann zur Realisierung der Maske auch eine Siebstruktur oder eine Gitterstruktur verwendet werden. Gemäß weiteren alternativen Ausgestaltungen kann die Maske durch ein Vlies oder ein Gewebe gebildet sein. Die Maske kann insbesondere Stützgeometrien aufweisen, mit welchen eine Stabilisierung der, den Durchströmungswiderstand bildenden Teile der Maske gegenüber z. B. mechanischen Belastungen bei der Montage oder Durchströmungsdrücken erreicht wird.

Gemäß einer besonders vorteilhaften Ausführungsform kann die Maske als Adsorberelement zum Adsorbieren von Kohlenwasserstoffen ausgestaltet sein. Hierdurch erhält die Maske eine Zusatzfunktion.

Die Maske kann lösbar oder unlösbar an der jeweiligen Endscheibe bzw. an der jeweiligen Innenzarge befestigt sein. Lösbare Befestigungen sind bspw. Clipsverbindungen, Rastverbindungen und Schraubverbindungen. Unlösbare Verbindungen sind bspw. Klebverbindungen, Schweißverbindungen oder eine Verbindung durch Plastifizieren. Ebenso ist es grundsätzlich möglich, die Maske mit wenigstens einer der Endscheiben und/oder mit besagter Innenzarge aus einem Stück herzustellen. Weiterhin kann die Maske in die Endscheibe eingeschäumt werden, wobei der Schaumwerkstoff der Endscheibe die Maske in diesem Bereich umschließt.

Erfindungsgemäß weist das Filterelement einen Drehlagenabgriff auf, der insbesondere an einer der Endscheiben ausgebildet sein kann. Durch den Drehlagenabgriff ist es möglich, die Drehlage des Filterelements zu erkennen, bspw. um eine ordnungsgemäße Montage im zugehörigen Filtergehäuse gewährleisten zu können. Ein derartiger Drehlagenabgriff kann bspw. für die maschinelle Montage von Vorteil sein. Insbesondere kann ein derartiger Drehlagenabgriff auch dann zweckmäßig sein, wenn das Filterelement nicht kreisringförmig gestaltet ist, sondern einen von der Kreisform abweichenden Querschnitt besitzt. Denkbar sind bspw. elliptische oder ovale Querschnitte.

Eine der Endscheiben kann als geschlossene Endscheibe ausgestaltet sein, derart, dass durch diese geschlossene Endscheibe hindurch keine fluidische Verbindung zwischen einer Umgebung des Filterelements und dem Inneren des Filterelements möglich ist. Zweckmäßig kann der zuvor genannte Drehlagenabgriff an einer solchen geschlossenen Endscheibe angeordnet sein.

Zumindest eine der Endscheiben ist als offene Endscheibe ausgestaltet, derart, dass durch die offene Endscheibe hindurch eine fluidische Verbindung zwischen einer Umgebung des Filterelements mit dem Inneren des Filterelements möglich ist. Bspw. definiert eine Öffnung der offenen Endscheibe einen reinseitigen Auslass des Filterelements. Entsprechend einer speziellen Ausführungsform kann vorgesehen sein, einen Stutzen, der eine zentrale Öffnung der offenen Endscheibe umschließt, mit Hilfe wenigstens einer Stützstrebe auszusteifen, die sich quer zur Axialrichtung des Filterelements erstreckt.

In der Umfangsrichtung erstreckt sich die Maske zweckmäßig in einem Bereich von einschließlich etwa ¼ bis einschließlich etwa ½ des gesamten Umfangs des Filterkörpers, wobei sich die Maske bevorzugt über etwa ein 1/3 des Umfangs des Filterkörpers erstreckt.

Entsprechend einer anderen bevorzugten Ausführungsform kann ein Durchströmungswiderstand der Maske über die Maske in Axialrichtung und/oder in Umfangsrichtung variieren. Bspw. kann die Maske so gestaltet sein, dass ihr Durchströmungswiderstand in der Axialrichtung von der einen Endscheibe in Richtung zur anderen Endscheibe abnimmt. Zusätzlich oder alternativ kann die Maske so konzipiert sein, dass ihr Durchströmungswiderstand in der Umfangsrichtung ausgehend von einer Mitte der Maske bis zu Umfangsenden der Maske abnimmt. Durch den entlang der Maske inhomogen verteilten Durchströmungswiderstand kann eine in entsprechender Weise inhomogene Anströmung des Filterelements im Bereich der Maske weitgehend kompensiert werden, was zu einer Homogenisierung der Anströmung des Filterkörpers in der Umfangsrichtung und in der Axialrichtung führt.

Das erfindungsgemäße Luftfilter weist ein Gehäuse auf, in dem das Filterelement einen außen liegenden Rohraum von einem innen liegenden Reinraum trennt. Zweckmäßig kann dieses Gehäuse einen rohseitigen Einlass aufweisen, der einem in der Umfangsrichtung begrenzten Einlassbereich des Gehäuses zugeordnet ist. Erfindungsgemäß wird nun das Filterelement im Gehäuse so angeordnet, dass die Maske dem Einlassbereich des Gehäuses zugewandt ist. Somit prallt die zugeführte Luftströmung zunächst auf die Maske und kann dadurch besser in der Umfangsrichtung sowie ggf. in der Axialrichtung des Filterelements verteilt werden, was insgesamt zu einer homogenisierten Anströmung und Durchströmung des Filterelements führt.

Besonders vorteilhaft kann der Einlass axial am Gehäuse angeordnet sein. Insbesondere handelt es sich dann nicht um einen tangentialen Einlass, sondern um einen Axialeinlass mit axial orientierter Einlassströmung.

Erfindungsgemäß weist das Gehäuse des Luftfilters eine Drehlagenausrichtung auf, die mit dem zuvor genannten Drehlagenabgriff des Filterelements zusammenwirkt und ein Einsetzen des Filterelements nur in einer vorbestimmten Drehlage erlaubt. Zweckmäßig wirken Drehlagenabgriff und Drehlagenausrichtung durch Formschluss zusammen. Bspw. kann der Drehlagenabgriff durch einen am Filterelement abstehenden Vorsprung gebildet sein, der mit einer entsprechenden, am Filtergehäuse ausgebildeten Ausnehmung zusammenwirkt, welche die dazu komplementäre Drehlagenausrichtung bildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht eines Luftfilters,
- Fig. 2: einen Längsschnitt des Luftfilters,
- Fig. 3: eine perspektivische Ansicht eines Filterelements,
- Fig. 4: eine Ansicht wie in Fig. 3, jedoch bei einer anderen Ausführungsform.

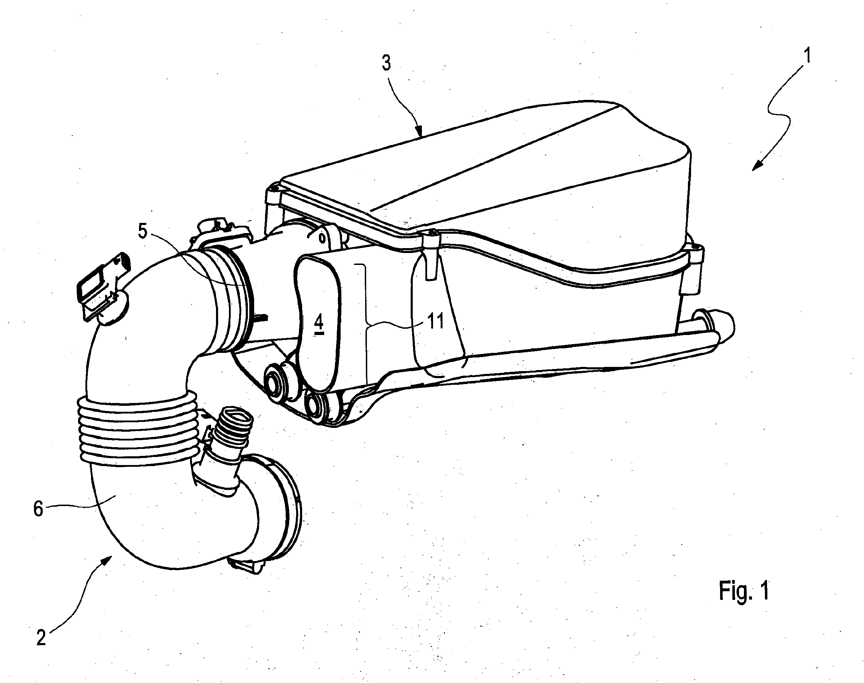

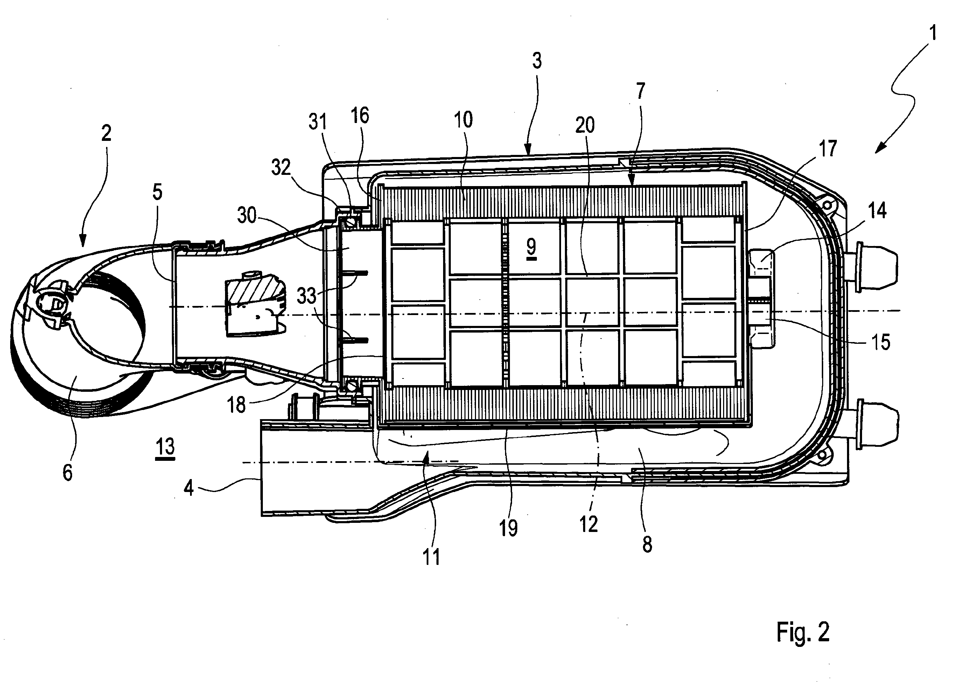

Entsprechend den Figuren 1 und 2 umfasst ein Luftfilter 1, das an eine Frischluftanlage 2 einer Brennkraftmaschine, die sich insbesondere in einem Fahrzeug befinden kann, angeschlossen werden kann, ein Gehäuse 3, das einen rohseitigen Einlass 4 und einen reinseitigen Auslass 5 aufweist. Mit dem Auslass 5 ist das Gehäuse 3 an eine Luftführungsleitung 6 der Frischluftanlage 2 angeschlossen, welche die reinseitige Frischluft weiter in Richtung Brennkraftmaschine führt.

Gemäß Fig. 2 umfasst das Luftfilter 1 außerdem ein Luftfilterelement 7, das im Gehäuse 3 angeordnet ist und darin einen Rohraum 8 von einem Reinraum 9 trennt. Das Filterelement 7 ist als Ringfilter konzipiert und besitzt daher einen ringförmigen Filterkörper 10, der aus einem geeigneten Filtermaterial besteht. Bzgl. des Filterelements 7 ist der Rohraum 8 außerhalb bzw. außen liegend angeordnet, während sich der Reinraum 9 im Inneren des Filterelements 7, also innen liegend befindet. Der Einlass 4 ist fluidisch mit dem Rohraum 8 gekoppelt, während der Auslass 5 bei montiertem Filterelement 3 mit dem Reinraum 9 fluidisch gekoppelt ist.

Der Einlass 4 ist gemäß den Figuren 1 und 2 am Gehäuse 3 so angeordnet, dass ihm innerhalb des Gehäuses 3, also im Rohraum 8 ein Einlassbereich 11 zugeordnet werden kann, der in einer Umfangsrichtung des Fiiterelements 7 begrenzt ist. Mit anderen Worten, der Einlassbereich 11 erstreckt sich nicht über den gesamten Umfang des Filterelements 7. Die Umfangsrichtung des Filterelements 7 bezieht sich dabei auf eine Längsmittelachse 12 des Filterelements 7, bzgl. der das Filterelement 7 ringförmig bzw. zylindrisch gestaltet ist.

Im Beispiel besitzt das Filterelement 7 einen elliptischen oder ovalen Querschnitt. Grundsätzlich ist auch ein Filterelement 7 mit kreisförmigem Querschnitt denkbar.

Das Filterelement 7 ist nun im Gehäuse 3 so angeordnet, dass die Maske 19 dem zuvor genannten Einlassbereich 11 des Gehäuses 3 zugewandt ist.

Ferner ist der Einlass 4 im Beispiel axial, also parallel zur Längsmittelachse 12 des Filterelements 7 am Gehäuse 3 angeordnet. Folglich strömt die Frischluft aus einer Umgebung 13 des Luftfilters 1 im Wesentlichen axial, also parallel zur Längsmittelachse 12 des Filterelements 7 durch den Einlass 4 in das Gehäuse 3 ein.

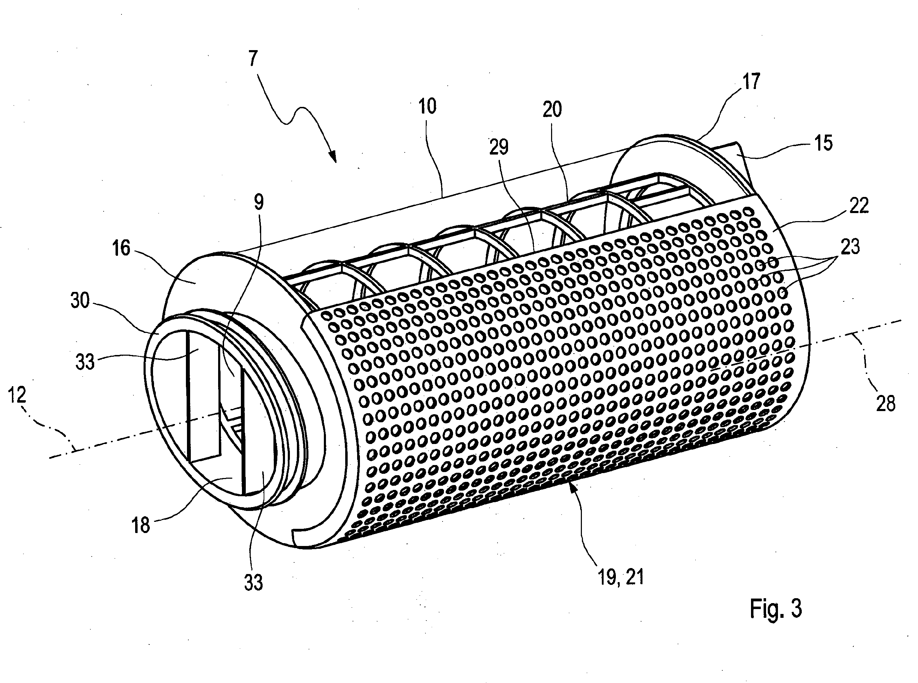

Ferner ist am Gehäuse 3 bzw. im Inneren des Gehäuses 3 eine Drehlagenausrichtung 14 angeordnet, die mit einem dazu komplementären Drehlagenabgriff 15 zusammenwirkt, sofern ein derartiger Drehlagenabgriff 15 am Filterelement 7 ausgebildet ist. Im Beispiel der Figuren 2 und 3 ist ein derartiger Drehlagenabgriff 15 am Filterelement 7 vorgesehen. Beim Montieren bzw. beim Einsetzen des Filterelements 7 in das Gehäuse 3 wirkt der Drehlagenabgriff 15 mit der Drehlagenausrichtung 14 zusammen, derart, dass das Filterelement 7 nur in mindestens einer vorbestimmten Drehlage relativ zum Gehäuse 3 in das Gehäuse 3 eingesetzt werden kann. Auf diese Weise kann eine vorbestimmte Drehlage zwischen Filterelement 7 und Gehäuse 3 gewährleistet werden.

Entsprechend den Figuren 2 bis 4 umfasst das Filterelement 7 zusätzlich zu seinem ringförmigen Filterkörper 10 zwei Endscheiben 16 und 17. Die beiden Endscheiben 16,17 sind an axialen Enden des Filterkörpers 10 angeordnet. Zumindest eine der Endscheiben, hier die links wiedergegebene Endscheibe 16, ist offen ausgestaltet und besitzt eine zentrale Öffnung 18. Durch diese Öffnung 18 kann die reinseitige Luft aus dem Reinraum 9 in Richtung Auslass 5 aus dem Inneren des Filterelements 7 austreten. Im Beispiel ist die andere Endscheibe 17, die sich in den Figuren 2 bis 4 rechts befindet, geschlossen ausgestaltet. Durch eine derartige geschlossene Endscheibe 17 findet keine fluidische Verbindung zwischen dem Inneren des Filterelements 7 und der Umgebung des Filterelements 7 statt, vielmehr dichtet die geschlossene Endscheibe 17 das Filterelement 7 axial. Bei der hier gezeigten, bevorzugten Ausführungsform ist der Drehlagenabgriff 15 an der geschlossenen Endscheibe 17 angeordnet. Dabei steht er axial von der geschlossenen Endscheibe 17 ab und kann so mit der Drehlagenausrichtung 14 des Gehäuses 3 zusammenwirken.

Beim hier vorgestellten Luftfilter 1 weist das Filterelement 7 eine Maske 19 auf, die von Luft durchströmbar ist und die sich in der Umfangsrichtung nur über einen Teilbereich des Filterkörpers 10 erstreckt. Bspw. erstreckt sich die Maske 19 etwa über 25% des Umfangs des Filterkörpers 10. Ebenso kann sich die Maske 19 über maximal 50% des Umfangs in der Umfangsrichtung entlang des Filterkörpers 10 erstrecken.

Bei den gezeigten Ausführungsformen erstreckt sich die Maske 19 in der Axialrichtung entlang des ganzen Filterkörpers 10. Somit erstreckt sich die Maske 19 von der einen Endscheibe 16 bis zur anderen Endscheibe 17. Grundsätzlich ist auch eine Ausführungsform denkbar, bei der sich die Maske 19 nicht über die gesamte axiale Länge des Filterkörpers 10 erstreckt, sondern nur über einen Axialabschnitt. Bevorzugt beginnt die Maske 19 an einer Endscheibe 16,17. Gemäß alternativen Ausgestaltungen kann die Maske 19 jedoch auch axial beabstandet zu den Endscheiben 16, 17 angeordnet sein. Die Maske 19 kann bei derartigen Ausgestaltungen über Befestigungsgeometrien verfügen, die die Maske 19 mit einer oder beiden Endscheiben 16, 17 verbinden. Bei der hier vorgestellten Einbausituation des Gehäuses 3 würde eine Maske 19, die sich nicht über die gesamte axiale Länge des Filterkörpers 10 erstreckt, an der offenen Endscheibe 16 beginnen und sich in Richtung der geschlossenen Endscheibe 17 erstrecken, bspw. über wenigstens 50% der axialen Länge des Filterkörpers 10. Bevorzugt ist jedoch die hier gezeigte Ausführungsform, bei welcher sich die Maske 19 axial über die gesamte Länge des Filterkörpers 10 erstreckt.

Ferner ist die Maske 19 bevorzugt radial außen am Filterkörper 10 angeordnet und an wenigstens einer Endscheibe 16,17 befestigt. Vorzugsweise ist die Maske 19 an beiden Endscheiben 16,17 befestigt. Bspw. kann die Maske 19 bzgl. der Endscheiben 16,17 ein separates Bauteil repräsentieren und an die Endscheiben 16,17 angebaut sein. Dabei kann die Maske 19 lösbar oder unlösbar an der jeweiligen Endscheibe 16,17 befestigt sein. Alternativ ist es ebenso möglich, die Maske 19 integral an zumindest einer der Endscheiben 16,17 auszuformen. Bevorzugt bilden die beiden Endscheiben 16,17 zusammen mit der Maske 19 ein Integralbauteil.

Alternativ ist es ebenso möglich, die Maske 19 radial innen am Filterkörper 10 anzuordnen. Dabei kann die Maske 19 bspw. an einer Innenzarge 20 des Filterelements 7 angeordnet oder ausgebildet sein, die das Filterelement 7 innen zur Abstützung des Filterkörpers 10 aufweisen kann. Insbesondere ist es dabei möglich, dass die Maske 19 separat zur Innenzarge 20 hergestellt ist und an die Innenzarge 20 angebaut ist. Alternativ kann die Maske 19 auch integral an der Innenzarge 20 ausgeformt sein. Eine innen am Filterkörper 10 angeordnete Maske 19 kann zusätzlich oder alternativ auch an wenigstens einer der Endscheiben 16,17 befestigt sein.

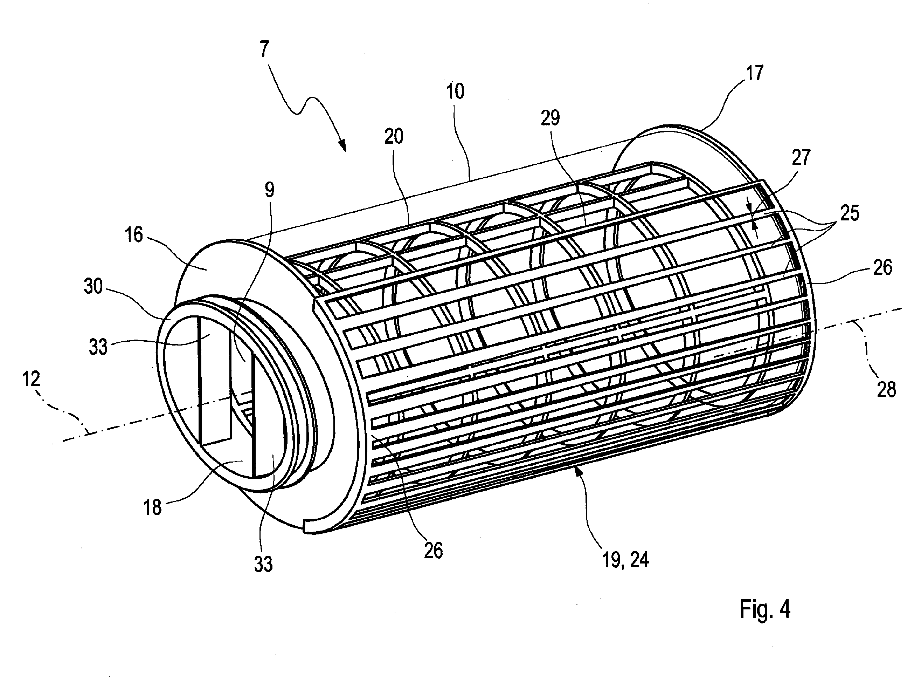

Bei der in Fig. 3 gezeigten Ausführungsform ist die Maske 19 durch eine Lochwandstruktur 21 gebildet, die sich durch einen Schalenkörper 22 charakterisiert, der mittels einer Vielzahl von Löchern 23 perforiert ist. Im Unterschied dazu zeigt Fig. 4 eine Ausführungsform, bei welcher die Maske 19 durch eine Lamellenstruktur 24 gebildet ist, die sich durch mehrere Lamellen 25 charakterisiert, die an ihren axialen Enden über bogenförmige Verbindungselemente 26 aneinander befestigt sind. Die Lamellen 25 erstrecken sich dabei parallel zur Längsmittelachse 12 des Filterelements 7 und somit auch parallel zueinander.

Alternativ ist es ebenso möglich, die Maske 19 durch eine Siebstruktur oder durch eine Gitterstruktur zu bilden.

Entsprechend einer besonders vorteilhaften Ausführungsform kann vorgesehen sein, die Maske 19 als Adsorberelement auszugestalten, mit dessen Hilfe Kohlenwasserstoffe CHX adsorbiert werden können.

Die Maske 19 ist von der mit Hilfe des Filterelements 7 zu reinigenden Luft durchströmbar. Hierzu besitzt die Lochwandstruktur 21 die Öffnungen 23, während bei der Lamellenstruktur 24 die Abstände zwischen benachbarten Lamellen 25 die Durchströmbarkeit der Maske 19 ermöglichen. Die Durchströmbarkeit der Maske 19 ist mit einem Durchströmungswiderstand verbunden, der dazu führt, dass sich die in den Rohraum 8 eintretende Luft besser in Richtung von Umfangsbereichen des Filterkörpers 10 verteilt, die nicht von der Maske 19 abgedeckt sind.

Der Durchströmungswiderstand der Maske 19 kann über die gesamte Erstreckung der Maske 19 homogen verteilt sein. Bevorzugt ist jedoch eine Ausführungsform, bei welcher der Durchströmungswiderstand der Maske 19 nur in der Axialrichtung oder nur in der Umfangsrichtung oder sowohl in der Axialrichtung als auch in der Umfangsrichtung über die Maske 19 variiert. Bspw. kann der Durchströmungswiderstand der Maske 19 in der Axialrichtung von der offenen Endscheibe 16 in Richtung zur geschlossenen Endscheibe 17 abnehmen. Dies kann bei der Lochwandstruktur 21 dadurch realisiert werden, dass in der genannten Axialrichtung die Anzahl der Öffnungen 23 je Flächeneinheit abnimmt und/oder dass die Öffnungsweiten der Öffnungen 23 zunehmen. Bei der Lamellenstruktur 24 kann eine in der Umfangsrichtung gemessene Breite 27 der Lamellen 25 in der Axialrichtung von der offenen Endscheibe 16 zur geschlossenen Endscheibe 17 abnehmen.

Zusätzlich oder alternativ kann vorgesehen sein, dass der Durchströmungswiderstand der Maske 19 in der Umfangsrichtung von einer durch eine strichpunktierte markierten Mitte 28 der Maske 19 bis zu den Umfangsenden 29, von denen in den Figuren 3 und 4 jedoch nur eines erkennbar ist, abnimmt. Dies kann bei der Lochwandstruktur 21 z. B. dadurch realisiert werden, dass die Anzahl der Löcher pro Flächeneinheit mit zunehmender Entfernung von der Mitte 28 in der Umfangsrichtung abnimmt. Zusätzlich oder alternativ kann die Öffnungsweite der Öffnungen 23 mit zunehmendem Abstand von der Mitte 28 in der Umfangsrichtung zunehmen. Bei der Lamellenstruktur 24 kann hierzu vorgesehen sein, die in der Umfangsrichtung gemessene Breite 27 der Lamellen 25 ausgehend von der Mitte 28 in der Umfangsrichtung zu reduzieren. Durch abnehmende Breite 27 vergrößern sich die Abstände bzw. Lücken zwischen benachbarten Lamellen 25, was den Durchströmungswiderstand der Maske 19 reduziert.

Bei den hier vorgestellten Ausführungsformen ist an der offenen Endscheibe 16 außerdem ein Auslassstutzen 30 angeordnet, der die Öffnung 18 der offenen Endscheibe 16 umfangsmäßig umschließt. An diesem Auslassstutzen 30 kann eine Dichtung 31, z. B. ein O-Ring angebracht sein, der im montierten Zustand mit einer zum Auslassstutzen 30 komplementären Stutzenaufnahme 32 zusammenwirkt, die im Gehäuse 3 ausgebildet ist. Innerhalb dieses Auslassstutzens 30 sind bei den hier gezeigten Ausführungsformen jeweils zwei Stützstreben 33 angeordnet, die sich quer zur Längsmittelachse 12 erstrecken und im Beispiel parallel zueinander verlaufen. Die Stützstreben 33 führen zu einer Aussteifung des Auslassstutzens 30. Dadurch kann die Stabilität des Auslassstutzens 30 verbessert werden.

## Patentansprüche

1. Luftfilter für eine Frischluftanlage (2) einer Brennkraftmaschine, insbesondere eines Kraftfahrzeugs,
- mit einem Filterelement (7), das einen ringförmigen Filterkörper (10) aus einem Filtermaterial und zwei Endscheiben (16,17) aufweist, die an axialen Enden des Filterkörpers (10) angeordnet sind, wobei am Filterkörper (10) eine von Luft durchströmbare Maske (19) vorgesehen ist, die sich in Umfangsrichtung nur über einen Teilbereich des Filterkörpers (10) und axial entlang wenigstens eines Teils des Filterkörpers (10) erstreckt,
- mit einem Gehäuse (3), in dem das Filterelement (7) einen außen liegenden Rohraum (8) von einem innen liegenden Reinraum (9) trennt,
- wobei das Gehäuse (3) einen rohseitigen Einlass (4) aufweist, der einem in der Umfangsrichtung begrenzten Einlassbereich (11) des Gehäuses (3) zugeordnet ist,
- wobei das Filterelement (7) so im Gehäuse (3) angeordnet ist, dass die Maske (19) dem Einlassbereich zugewandt ist,
**dadurch gekennzeichnet,**
- **dass** das Filterelement (7) einen Drehlagenabgriff (15) aufweist,
- **dass** das Gehäuse (3) eine Drehiagenausrichtung (14) aufweist, die mit dem Drehlagenabgriff (15) zusammenwirkt und ein Einsetzen des Filterelements (7) nur in einer vorbestimmten Drehlage relativ zum Gehäuse (3) erlaubt.

2. Luftfilter nach Anspruch 1,
**dadurch gekennzeichnet,**
**dass** der Drehlagenabgriff (15) separat zur Maske (19) vorgesehen ist.

3. Luftfilter nach Anspruch 1 oder 2,
**dadurch gekennzeichnet,**
**dass** der Drehlagenabgriff (15) an einer der Endscheiben (16, 17) ausgebildet ist.

4. Luftfilter nach Anspruch 3,
**dadurch gekennzeichnet,**
**dass** der Drehlagenabgriff (15) axial außen an der jeweiligen Endscheibe (17) angeordnet ist.

5. Luftfilter nach Anspruch 3 oder 4,
**dadurch gekennzeichnet,**
**dass** die jeweilige, den Drehlagenabgriff (15) aufweisende Endscheibe (17) als geschlossene Endscheibe-ausgestaltet ist.

6. Luftfilter nach einem der Ansprüche 1 bis 5,
**dadurch gekennzeichnet,**
**dass** der Einlass (4) axial am Gehäuse (3) angeordnet ist.

7. Luftfilter nach einem der Ansprüche 1 bis 6,
**dadurch gekennzeichnet,**
- **dass** die Maske (19) radial außen am Filterkörper (10) angeordnet und an wenigstens einer Endscheibe (16,17) befestigt ist, oder
- **dass** die Maske (19) radial innen am Filterkörper (10) angeordnet und an wenigstens einer Endscheibe (16,17) und/oder an einer den Filterkörper (10) radial innen abstützenden Innenzarge (20) befestigt ist.

8. Luftfilter nach einem der Ansprüche 1 bis 7,
**dadurch gekennzeichnet,**
- **dass** die Maske (19) durch eine Lamellenstruktur (24) gebildet ist, oder
- **dass** die Maske (19) durch eine Lochwandstruktur (21) gebildet ist, oder
- **dass** die Maske (19) durch eine Siebstruktur gebildet ist, oder
- **dass** die Maske (19) durch eine Gitterstruktur gebildet ist, oder
- **dass** die Maske (19) durch ein Vlies oder Gewebe gebildet ist.

9. Luftfilter nach einem der Ansprüche 1 bis 8,
**dadurch gekennzeichnet,**
**dass** die Maske (19) als Adsorberelement zum Adsorbieren von Kohlenwasserstoffen ausgestaltet ist.

10. Luftfilter nach einem der Ansprüche 1 bis 9,
**dadurch gekennzeichnet,**
**dass** die Maske (19) lösbar oder unlösbar an der jeweiligen Endscheibe (16,17) und/oder an einer den Filterkörper (10) radial innen abstützenden Innenzarge (20) befestigt ist.

11. Luftfilter nach einem der Ansprüche 1 bis 10,
**dadurch gekennzeichnet,**
**dass** ein Durchströmungswiderstand der Maske (19) über die Maske (19) in Axialrichtung und/oder in Umfangsrichtung variiert.

12. Luftfilter nach Anspruch 11,
**dadurch gekennzeichnet,**
**dass** der Durchströmungswiderstand der Maske (19) in der Axialrichtung von der einen Endscheibe (16) zur anderen Endscheibe (17) abnimmt.

13. Luftfilter nach Anspruch 11 oder 12,
**dadurch gekennzeichnet,**
**dass** der Durchströmungswiderstand der Maske (19) in der Umfangsrichtung von einer Mitte (28) der Maske (19) bis zu Umfangsenden (29) der Maske (19) abnimmt.

## Claims

1. Air filter for a fresh-air system (2) in an internal combustion engine, in particular of a motor vehicle,
- comprising a filter element (7) having an annular filter body (10) consisting of a filter material and two end discs (16, 17) which are arranged at axial ends of the filter body (10), a cover (19), through which air can flow, being provided on the filter body (10) and extending in the circumferential direction over only a portion of the filter body (10) and in an axial direction along at least part of the filter body (10),
- comprising a housing (3) in which the filter element (7) separates an external dirty chamber (8) from an internal clean chamber (9),
- the housing (3) having a dirty-side inlet (4) which is assigned to an inlet region (11) of the housing (3), which inlet region is delimited in the circumferential direction,
- the filter element (7) being arranged in the housing (3) in such a way that the cover (19) faces the inlet region,
**characterised in that**
- the filter element (7) has a rotational position adjustment means (15),
- the housing (3) has a rotational position alignment means (14) which interacts with the rotational position adjustment means (15) and allows the filter element (7) to be inserted in only one predetermined rotational position in relation to the housing (3).

2. Air filter according to claim 1, **characterised in that** the rotational position adjustment means (15) is provided separately to the cover (19).

3. Air filter according to either claim 1 or claim 2, **characterised in that** the rotational position adjustment means (15) is formed on one of the end discs (16, 17).

4. Air filter according to claim 3, **characterised in that** the rotational position adjustment means (15) is arranged axially externally on the respective end disc (17).

5. Air filter according to either claim 3 or claim 4, **characterised in that** the respective end disc (17) comprising the rotational position adjustment means (15) is designed as a closed end disc.

6. Air filter according to any of claims 1 to 5, **characterised in that** the inlet (4) is arranged axially on the housing (3).

7. Air filter according to any of claims 1 to 6, **characterised in that**
- the cover (19) is arranged radially externally on the filter body (10) and is attached to at least one end disc (16, 17), or
- the cover (19) is arranged radially internally on the filter body (10) and is attached to at least one end disc (16, 17) and/or to an internal frame (20) which radially internally supports the filter body (10).

8. Air filter according to any of claims 1 to 7, **characterised in that**
- the cover (19) is formed by a lamellar structure (24), or
- the cover (19) is formed by a perforated wall structure (21), or
- the cover (19) is formed by a sieve structure, or
- the cover (19) is formed by a grid structure, or
- the cover (19) is formed from a non-woven or woven fabric.

9. Air filter according to any of claims 1 to 8, **characterised in that** the cover (19) is designed as an adsorption element for adsorbing hydrocarbons.

10. Air filter according to any of claims 1 to 9, **characterised in that** the cover (19) is attached, in a releasable or non-releasable manner, to the respective end disc (16, 17) and/or to an internal frame (20) which radially internally supports the filter body (10).

11. Air filter according to any of claims 1 to 10, **characterised in that** a flow resistance of the cover (19) varies across the cover (19) in the axial and/or circumferential direction.

12. Air filter according to claim 11, **characterised in that** the flow resistance of the cover (19) decreases in the axial direction from one end disc (16) to the other end disc (17).

13. Air filter according to either claim 11 or claim 12, **characterised in that** the flow resistance of the cover (19) decreases in the circumferential direction from a centre (28) of the cover (19) up to circumferential ends (29) of the cover (19).

## Revendications

1. Filtre à air pour une installation d'air frais (2) d'un moteur à combustion interne, en particulier d'un véhicule automobile, comprenant :
- un élément de filtre (7), qui présente un corps de filtre annulaire (10) formé d'un matériau filtrant et de deux disques d'extrémité (16, 17), qui sont aménagés aux extrémités axiales du corps de filtre (10), dans lequel il est prévu sur le corps de filtre (10) un masque de protection (19) qui peut être traversé par l'air et qui s'étend dans la direction périphérique uniquement sur une zone partielle du corps de filtre (10) et axialement le long d'au moins une partie du corps de filtre (10),
- un boîtier (3), dans lequel l'élément de filtre (7) sépare un espace brut (8) situé à l'extérieur d'un espace purifié (9) situé à l'intérieur,
- dans lequel le boîtier (3) présente une admission côté brut (4) qui est affecté à une zone d'admission (11) du boîtier (3) délimitée dans la direction périphérique,
- dans lequel l'élément de filtre (7) est aménagé dans le boîtier (3) de sorte que le masque de protection (19) soit tourné vers la zone d'admission,
**caractérisé en ce que** :
- l'élément de filtre (7) présente une prise de position rotative (15),
- le boîtier (3) présente un alignement de position rotative (14) qui coopère avec la prise de position rotative (15) et permet une insertion de l'élément de filtre (7) uniquement dans une position rotative prédéterminée par rapport au boîtier (3).

2. Filtre à air selon la revendication 1, **caractérisé en ce que** :
la prise de position rotative (15) est prévue séparément du masque de protection (19).

3. Filtre à air selon la revendication 1 ou la revendication 2,
**caractérisé en ce que** :
la prise de position rotative (15) est formée sur l'un des disques d'extrémité (16, 17).

4. Filtre à air selon la revendication 3,
**caractérisé en ce que** :
la prise de position rotative (15) est aménagée axialement à l'extérieur sur le disque d'extrémité respectif (17).

5. Filtre à air selon la revendication 3 ou la revendication 4,
**caractérisé en ce que** :
le disque d'extrémité respectif (17) présentant la prise de position rotative (15) se présente sous la forme d'un disque d'extrémité fermé.

6. Filtre à air selon l'une quelconque des revendications 1 à 5,
**caractérisé en ce que** :
l'admission (4) est aménagée axialement sur le boîtier (3).

7. Filtre à air selon l'une quelconque des revendications 1 à 6,
**caractérisé en ce que** :
- le masque de protection (19) est aménagé radialement à l'extérieur sur le corps de filtre (10) et est fixé à au moins un disque d'extrémité (16, 17), ou
- le masque (19) est aménagé radialement à l'intérieur sur le corps de filtre (10) et est fixé à au moins un disque d'extrémité (16, 17) et/ou à un châssis interne (20) s'appuyant radialement vers l'intérieur sur le corps de filtre (10).

8. Filtre à air selon l'une quelconque des revendications 1 à 7,
**caractérisé en ce que** :
- Le masque de protection (19) est formé par une structure lamellaire (24),
- le masque de protection (19) est formé par une structure de paroi perforée (21) ou
- le masque de protection (19) est formé par une structure en tamis, ou
- le masque de protection (19) est formé par une structure réticulaire ou
- le masque de protection (19) est formé par un voile ou un tissu.

9. Filtre à air selon l'une quelconque des revendications 1 à 8,
**caractérisé en ce que** :
le masque de protection (19) se présente sous la forme d'un élément d'adsorption pour adsorber des hydrocarbures.

10. Filtre à air selon l'une quelconque des revendications 1 à 9,
**caractérisé en ce que** :
le masque de protection (19) peut être démonté ou monté sur le disque d'extrémité respectif (16, 17) et/ou est fixé sur un châssis interne (20) s'appuyant radialement vers l'intérieur sur le corps de filtre (10).

11. Filtre à air selon l'une quelconque des revendications 1 à 10,
**caractérisé en ce que** :
la résistance au passage du masque (19) varie sur le masque (19) dans la direction axiale et/ou dans la direction périphérique.

12. Filtre à air selon la revendication 11, **caractérisé en ce que** :
la résistance au passage du masque (19) diminue dans la direction axiale d'un disque d'extrémité (16) à l'autre disque d'extrémité (17).

13. Filtre à air selon la revendication 11 ou la
revendication 12,
**caractérisé en ce que** :
la résistance au passage du masque (19) diminue dans la direction périphérique du centre (28) du masque (19) aux extrémités périphériques (29) du masque (19).
